# DEMANDE DE BREVET EUROPEEN

(11) **EP 2 290 225 A1**
(43) Date de publication de la demande: **02.03.2011**
(21) Numéro de dépôt: 10290310.1
(22) Date de dépôt: 08.06.2010
(51) Int. Cl.: F03B 11/06, F03D 11/00

(54) **Dispositif pour realiser un assemblage de la roue d'une eolienne ou hydrolienne à axe vertical et de la génératrice électrique**

(30) Priorité: 22.06.2009 FR 0903047
(71) Demandeur: Le Ster, Gerard, 29800 Landerneau (FR)
(72) Inventeur: Le Ster, Gerard, 29800 Landerneau (FR)

(57) **Abrégé**

Dispositif pour réaliser un assemblage simple et efficace de la roue d'une éolienne ou hydrolienne à axe vertical et de la génératrice électrique.

Ce dispositif se compose d'une platine (4) sur laquelle est fixé le moyeu (1) de la roue et sous laquelle est fixé la ou les génératrice(s) électrique (10).
Actuellement les éoliennes ou hydroliennes à axe vertical sont peu utilisé du fait d'un assemblage trop compliqué.
La simplicité de l'invention permet de remédier aux défauts d'un assemblage trop compliqué : manque de fiabilité et perte d'énergie. L'invention peut être utilisée pour toutes les éoliennes ou hydroliennes à axe vertical destinées à produire de l'électricité, avec un avantage particulier pour l'hydrolienne à axe vertical qui du fait de sa conception tourne dans un plan horizontal et profite au mieux d'une faible profondeur d'eau.

## Description

La présente invention concerne un dispositif d'assemblage des différentes pièces constituant une éolienne ou une hydrolienne à axe verticale et de la génératrice électrique.

Les grandes éoliennes à axe horizontal qui développe une puissance de 1 mégawatt, avec une envergure d'environ 80 mètres, et une hauteur allant jusqu'à 150 mètres ont une vitesse linéaire en bout de pale qui peut être vingt fois supérieure à la vitesse du vent, donc un coefficient λ >20, d'où le constat de nuisances sonores.

Les hydroliennes à axe horizontal et à hélices sont pénalisées par la hauteur de leurs hélices.

Les éoliennes et les hydroliennes à axe vertical sont peut utilisées du fait des conceptions d'assemblage compliqué.

Le dispositif selon l'invention permet d'avoir un assemblage simple avec le moins de pièces intermédiaires possible permettant plus de fiabilité et de réduire au maximum les pertes d'énergies: le moyeu de la roue de l'éolienne ou de l'hydrolienne est fixé sur une platine et la génératrice électrique est fixé sous cette même platine.
La FG. 1 représente une roue avec 8 pales creuses en forme de demi sphère avec un rayon de giration supérieur à 1,5 fois leur diamètre. Le CX de la demi sphère est d'environ 1,40 pour la partie creuse, et 0,40 pour la partie bombée.
La FIG.2 représente une roue d'éolienne et son support selon l'invention en haut d'un mât.

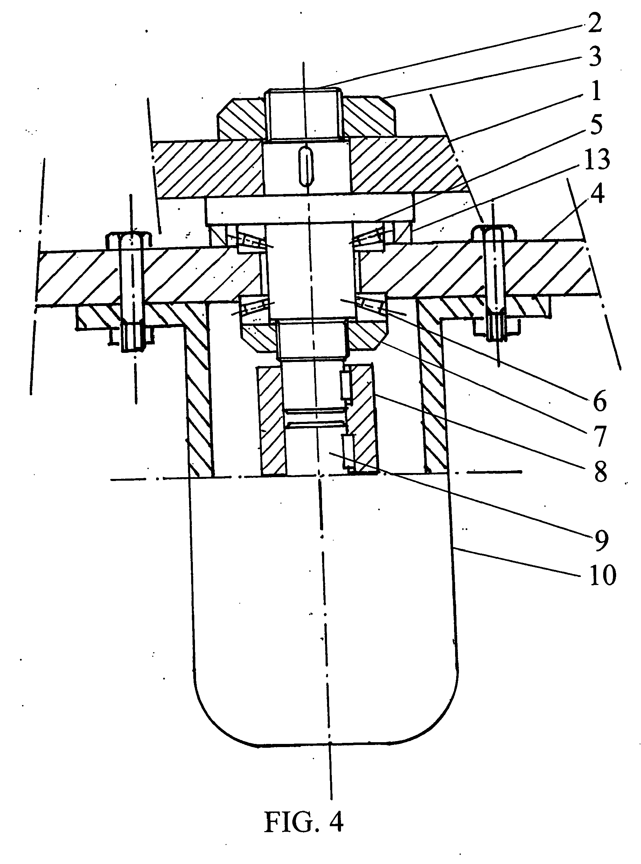

Les FIG. 3 et 4 montrent les détails du montage de l'invention.

Le dispositif comporte en effet selon une première caractéristique une platine (4) sur laquelle est monté à la fois le moyeu (1) de la roue de l'éolienne ou de l'hydrolienne, et la ou les génératrice(s) électrique(s).
Dans la suite nous allons parler de roue (1), puisque à chaque fois il s'agit d'une roue d'éolienne ou d'hydrolienne à axe vertical.

Sur cette platine (4) est percée en son centre un alésage qui permet le passage de l'axe (2) de la roue. De même, il est réalisé de chaque coté un usinage précis et centré sur l'alésage qui permet de maintenir les deux roulements à rouleaux conique (5) et (6).
L'axe (2) de la roue (1) passe dans l'alésage et est parfaitement guidé en rotation et en translation par les deux roulements (5) et (6), et par l'épaulement de l'axe (2) d'un coté et l'écrou (7) de type SKF avec bague d'arrêt de l'autre.

Selon des modes particuliers de réalisation un joint d'étanchéité (13) peut être monté.

Selon des modes particuliers de réalisation la fixation de l'axe (2) de la roue sur la platine peut être réalisé d'autres façons, par exemple grâce à la fixation d'un palier sur la platine (4) qui assurera son guidage en rotation, et un jeu de deux butées à billes ou à aiguilles qui assureront son maintient en translation avec l'épaulement sur l'axe (2) et l'écrou (7) de type SKF avec bague d'arrêt.

La génératrice électrique (10) est fixée sous la platine (4) et son axe (9) est entraîné directement par un manchon et deux clavettes par l'axe (2) de la roue.

Selon des modes particuliers de réalisation la génératrice électrique (2) peut être fixé sous la platine (4) de façon à être entraînée par un système intermédiaire qui permet de multiplier ou démultiplier les vitesses de rotation des axes, comme par exemple des engrenages, des courroies ou d'autre système.

Selon des modes particuliers de réalisation plusieurs génératrices électriques peuvent être fixées sous la platine (4) et également être entraînées en rotation par un système intermédiaire, engrenages, courroies ou autres.

La platine (4) à son tour est fixée sur un mât d'éolienne, ou pour plus de standardisation sur un support (11).
Ce support (11) à la forme d'un cylindre creux avec possibilité d'ouvertures d'aération et de trappes de visites.

Selon des modes particuliers de réalisation Ce support (11) peut aussi avoir la forme d'une ossature tubulaire ou avoir une autre forme.

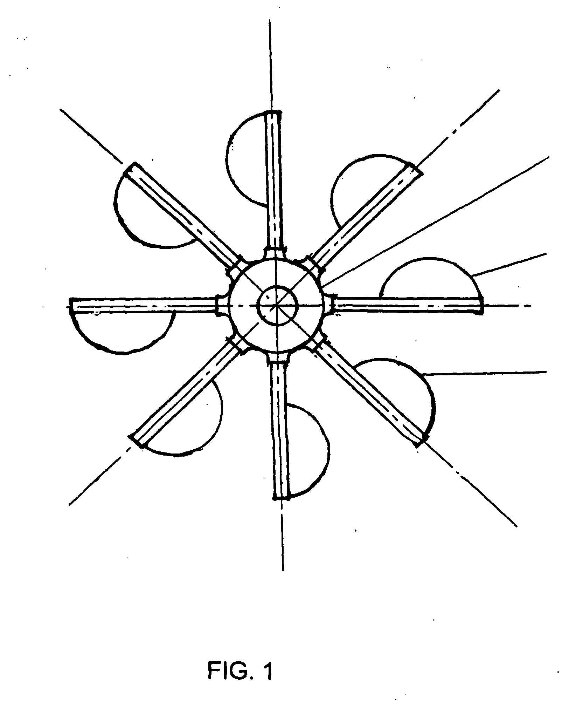

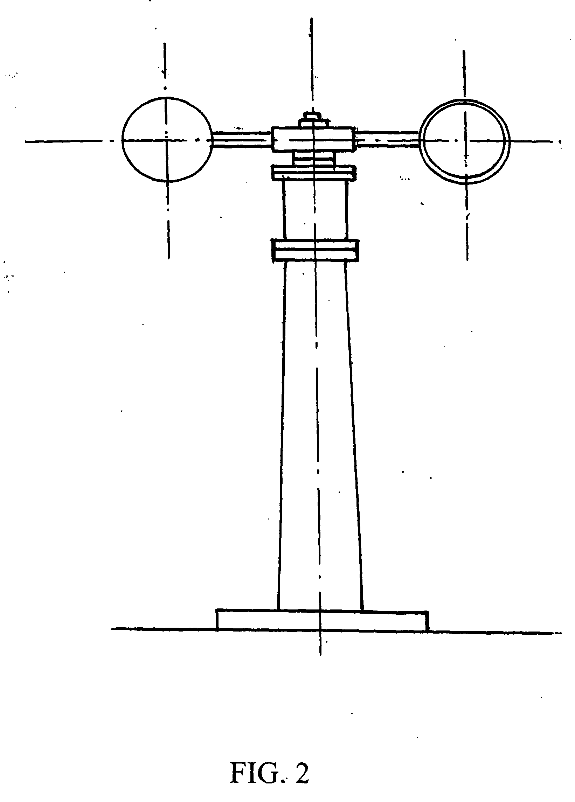

Ce support (11) peut être placé en haut d'un mât FIG 2 , ou sur une toiture ou autre emplacement pour une éolienne.

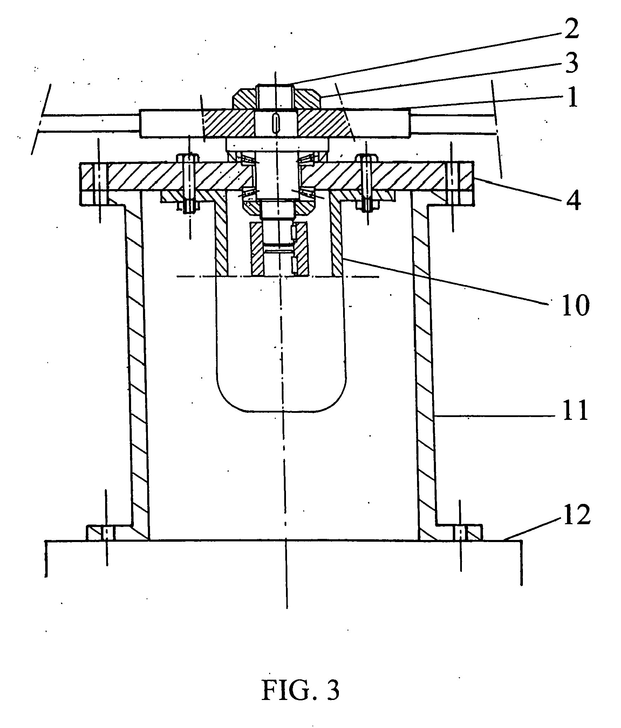

Ce support (11) peut être ancré sur un socle (12), FIG. 3 pour une hydrolienne.

Les applications industrielles pour ce type de montage simple sont celles de toutes les éoliennes ou hydroliennes destinées à produire de l'électricité.

Il y a un avantage particulier pour l'hydrolienne à axe vertical qui du fait de sa conception tourne dans un plan horizontal et profite au mieux d'une faible profondeur d'eau. Autre élément important : la masse volumique de l'eau est de 1 000 kG par mètre cube, alors que c'elle de l'air de 1,20 kG par mètre cube. Cette hydrolienne peut travailler avec les courants fluviaux, marins, et le flux et reflux des marées.

## Revendications

1. dispositif d'assemblage d'une roue d'éolienne ou d'hydrolienne à axe vertical et de sa génératrice électrique (10) **caractérisé en ce qu'**il se compose d'une platine (4) percée en son centre et sur laquelle est fixé le moyeu (1) de la roue de l'éolienne ou de l'hydrolienne à axe verticale, et sous laquelle est fixée une ou plusieurs génératrices électriques (10). Ce montage permet de maintenir l'axe (2) de la roue grâce à l'écrou avec bague d'arrêt (7).
